# EUROPEAN PATENT SPECIFICATION

(11) **EP 1 771 988 B1**
(45) Date of publication and mention of the grant of the patent: **01.12.2010**
(21) Application number: 04763727.7
(22) Date of filing: 30.07.2004
(51) Int. Cl.: H04L 29/06

(54) **SECURE LOAD BALANCING IN A NETWORK**
SICHERER LASTAUSGLEICH IN EINEM NETZWERK
ÉQUILIBRAGE DE CHARGE SÉCURISÉ DANS UN RÉSEAU

(43) Date of publication of application: 11.04.2007
(73) Proprietor: Telefonaktiebolaget LM Ericsson (publ), 164 83 Stockholm (SE)
(72) Inventor: BOMAN, Krister, S-431 44 Mölndal (SE); AXELSSON, Stefan, S-433 66 Sävedalen (SE); HELLBERG, Jan, S-430 33 Fjäras (SE)
(74) Representative: Vejgaard, Christian
(86) International application number: PCT/EP2004/008665
(87) International publication number: WO 2006/010384

(56) References cited:
- WO-A-03/069474
- US-A- 6 078 957
- US-B1- 6 601 084

## Description

### TECHNICAL FIELD

The present invention relates to a system comprising at least two resources and a hash function, which system is arranged for distributing external users to the resources, where the number of users is larger than the number of resources.

The present invention also relates to a method according to the system above.

### BACKGROUND ART

In many application today, a large number of users access a considerable fewer number of resources in a system. The users, on one hand, may be devices handled by humans, the devices may for example be computers and mobile equipment. The resources, on the other hand, may be processes, processors, printers and many other things. A more wide definition of a resource in this context is "something that performs a task for something else". Regarding functionality, the resources are equivalent, thus it is unimportant which resource a certain user is guided to from a functional point of view.

But in order to direct a certain user to the correct resource, it is of great importance that the direction is performed in a balanced way, i.e. that the large number of users is evenly distributed to the relatively few resources, avoiding that some resources are used by very few users and some resources are used by very many users.

Today the above task is generally performed by feeding a user identification code, IdX for user X, to the system comprising the resources. IdX is then fed through a so called hash function.

In this context, a hash function is a transformation that takes data from a definition set and transforms these data to output data in a value set, which output data is called the hash value. The definition set is generally larger than the value set. This means that the hash function is "many to one", i.e. several combinations of input data result in the same output data or hash value. The hash function does not preserve structure. Ideally, for each input data, the possibility for acquiring any of the possible output data should be equal. Any inequalities in the frequency distribution of the input data is transformed into a uniform distribution of output data.

A simple example is where 100 000 users, each one having a user number IdX which is between 1-100 000 identifying each user, share 16 resources numbered 1-16. The hash function may then be of such a sort that it evenly distributes the users among the resources according to a simple algorithm. For example, each sixteenth user is directed to the same resource. Then the users 1, 17, 33, 49 ... are directed to resource number 1, the users 2, 18, 34, 50 ... are directed to resource number 2, and so on.

The main feature of the hash function is that it directs the user in question to one of the resources 1-16. Generally, the hash function results in an identical result for a number of different inputs, i.e. many different inputs result in relatively few different outputs. This is called "many to one".

If the resources, to which the users are guided, each one is adapted to handle an equivalent amount of users, it is important that the hash function produces a uniformly distributed output. Then the users are uniformly distributed among the resources, causing a load balance.

The disclosure WO03/069474 proposes a distribution of the users to the resources depending on the nature of the task, i.e. round robin if the task is a processing task and hash if the task is a storing one.

There may, however, be problems due to accident as well as on purpose. Accidentally, the users may consist of different groups, requesting access to the resources to different degrees. If these groups are unfortunately balanced, the users that are guided to a certain resource by the hash function may request access to the resources to a larger extent than the other users. This certain resource is then subject to a larger load than the other resources, resulting in a biased load balance among the resources.

On purpose, so-called "hash attacks" occur, which are intended to cause a biased load balance among the resources. The hash attacks are generally made possible by the attackers having sufficient knowledge about the system and/or the attackers making use of information that is output from the system comprising the resources. The attackers then see to that each request for resources, when passing the hash function, is guided to one and the same resource. This resource is then subject to an unusually high load, and then functions more or less inefficiently, which may result in a so called "denial of service", where the resource does not accept any more users. This may affect the service efficiency of the whole system.

The reason for unleashing a hash attack is to achieve a "denial of service", i.e. making one or more resources unavailable for other users. The other users that are guided to the attacked resource or resources, which other users are unaware of that a hash attack is in progress, only perceive that the service they are requesting is unavailable. This reveals a poor service availability for the other users, which in turn impairs the good will and thus the trademark of the service provider.

Today, there are server systems which are arranged to adapt the hash function due to the current load balance, and prevent that a biased load balance occur. This adaptive arrangement requires a lot of system resources and maintenance, and may have difficulties keeping up with occurring load imbalances that occur during a hash attack. Even if the adaptive system is able to achieve a proper load balance during a hash attack, the adaptive procedure generally requires such an amount of system of resources that a "denial of service" situation more or less occurs anyway, since the system is busy defending itself. The attacker thus achieves its goal anyway.

### DISCLOSURE OF THE INVENTION

It is an object of the present invention to provide a system and a method for preventing hash attacks by assuring that a proper load balance is maintained, only requiring a small amount of system resources.

One aspect of the present invention is an apparatus as defined in independent claim 1. Another aspect of the invention is a method as defined in independent claim 9. Further embodiments of the invention are specified in the respective appended dependent claims.

Preferably, the uniformness of the distribution according to the system and method above is created by means of an encryption algorithm.

Preferred embodiments are disclosed in the dependent claims.

Several advantages are obtained by means of the present invention. For example:
- An inexpensive means, requiring very little maintenance, for preventing a hash attack is obtained.
- A hash attack may be prevented using very little system resources.

### BRIEF DESCRIPTION OF THE DRAWINGS

The invention will now be described more in detail with reference to the enclosed drawings, where:
- Figure 1: shows a general overview of a system according to a first embodiment of the invention;
- Figure 2: shows a general overview of a system according to a second embodiment of the invention; and
- Figure 3: shows a general overview of a system according to a third embodiment of the invention.

### EMBODIMENTS OF THE INVENTION

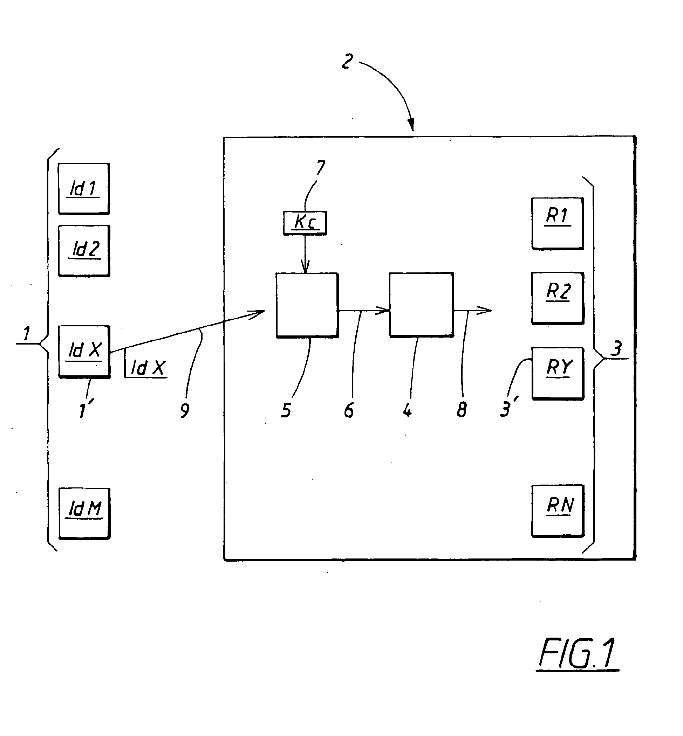

As shown in Figure 1, a number M of users 1, each one having an identification code or number Id1 to IdM, is able to connect to a system 2 having a number N of resources 3, each one having an identification code or number R1 to RN, where the number M of users 1 is much larger than the number N of resources 3, i.e. M>>N. The users 1 may for example be mobile equipment, such as mobile telephones or mobile computers, handled by mobile equipment owners, and the system 2 may be a mobile equipment node, and where the resources 3 are services provided at the mobile equipment system node.

If a certain user 1', having a certain identification code or number IdX, wants to access a resource in the system, it is unimportant which one of the resources 3 the user should be guided to from a functional point of view. In order to achieve an even load balance of users 1 for the resources 3, the IdX identification code or number is passed through a hash function 4, which hash function 4 creates an even spread of the users 1, distributing them among the available resources 3.

According to the present invention, in order to randomize which resource 3 a certain user 1 is guided to, the input to the hash function 4 is first randomized. This is obtained by encrypting the input data to the hash function 4, using an encryption algorithm 5, where the encryption produces a cipher 6 by using at least a cipher key Kc 7. This cipher 6 is used as an input to the hash function 4, which produces a hash value 8, guiding the user to a certain resource 3', having a certain identification code or number RY, among the available resources 3.

The encryption algorithm 5 produces a unique output cipher 6 for a certain input 9 at a certain time, this is called "one to one". A good encryption algorithm 5 provides a uniform output, which output ideally is completely randomized. As the encryption is used as a randomizer, "whitening" the input 6 to the hash function 4, no decryption takes place at all. It is important that the encryption is of a such kind that a non-repeating randomizing is acquired. A certain input 9 should then result in any output 6 within the encryption output range, having the same probability for acquiring any value within the encryption output range every time. Thus a uniform distribution of the users 1 among the resources 3 is obtained.

A simple example, still with reference to Figure 1, is where 100 000 users 1, each one having a user number IdX which is between 1-100 000, identifying each user, share 16 resources 3, each resource having a user number RY which is between 1 and 16. In other words, M = 100 000 and N = 16. The hash function 4 evenly distributes the users among the resources 3. The output of the hash function 4 directs the user to one of the resources 3. Before feeding the user number IdX into the hash function 4, it is encrypted by an encryption algorithm 5, randomizing the user number IdX. The range of the encryption output 6, the cipher, may be much larger than the number M of users 1, although it is not necessary.

If user number 50 000 wants to use a resource 3, the number 50 000 is encrypted and the encryption then produces a number within the encryption output range. Each time the number 50 000 is encrypted, any output within the output range is produced, having the same probability for acquiring any value within the output range every time the number 50 000 is encrypted. This is the case for any user number being fed into the encryption algorithm 5.

According to the example, the hash function 4 evenly produces a number in the range 1-16 as an output 8. The hash function 4 according to this example always produces the same output for a given input. As the encryption algorithm 5 produces any number within the encryption output range every time an input is fed into the encryption algorithm 5, the hash function 4 is fed with any number within the encryption output range every time an input 9 is fed into the encryption algorithm 5. As the input 6 to the hash function 4 is randomized, the output 8 from the hash function 4 is also randomized, making hash attacks unfeasible, since the distribution is uniformed.

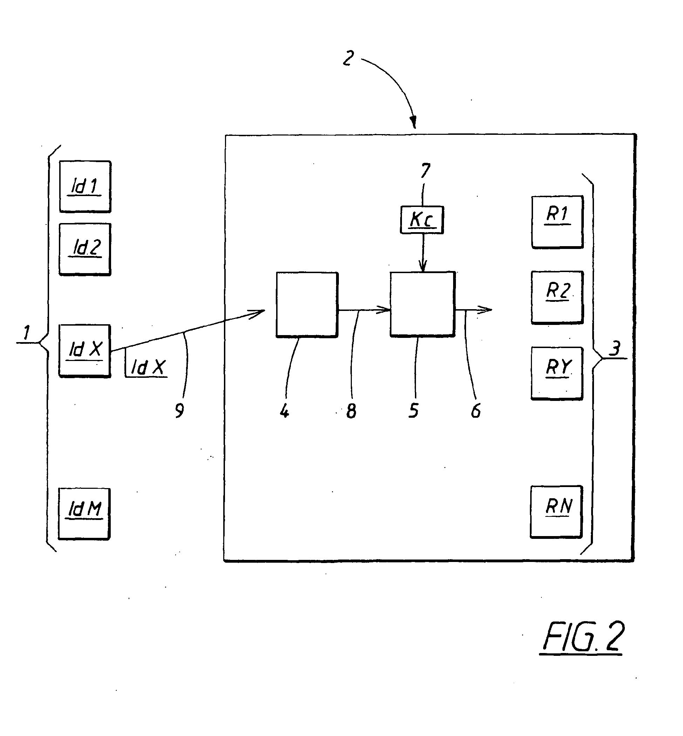

As shown in Figure 2, according to a second embodiment, the user's input 9 into the system 2 is fed into a hash function 4 first, and then the output 8 of the hash function 4 is randomized by means of an encryption algorithm 5. The encryption algorithm 5 then preferably has an output which is easy to translate to a certain identification code or number RY of the resources 3.

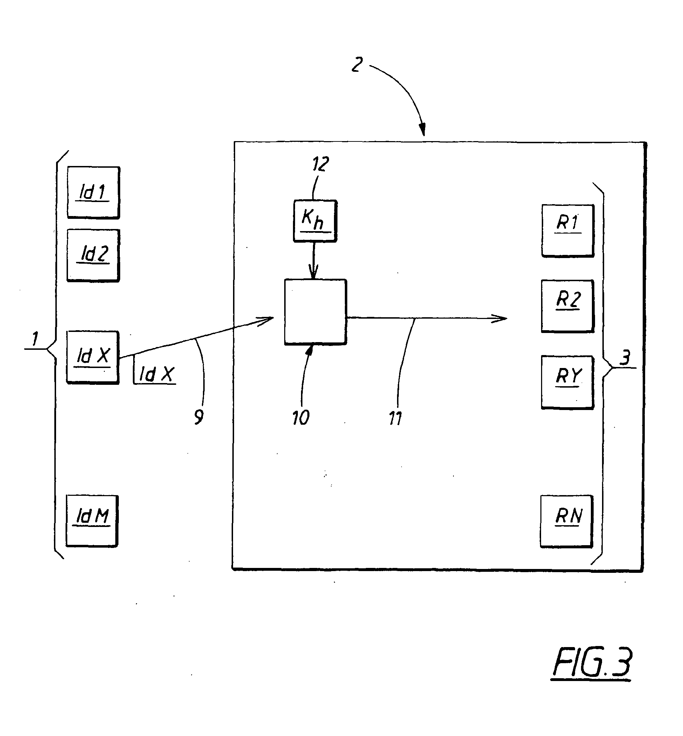

Further, as shown in Figure 3, according to a third embodiment, the user's input 9 into the system is fed into a so-called keyed hash function 10, which provides a randomized output 11. In order to achieve this, a hash key Kh 12 is used for the keyed hash function 10. As before, encryption has to be of such a kind that each time when one certain input 9 into the system 2 is fed into the keyed hash function 10, any output 11 within the output range is produced, having the same probability for acquiring any value within the output range every time. In this case, no separate encryption algorithm is used, but the encryption and the load distribution is all taken care of by the keyed hash function 10. The keyed hash function 10 preferably has an output 11 which is easy to translate to a certain identification code or number RY of the resources 3.

The efficiency of any randomizing procedure is purely dependent on the efficiency of the encryption algorithm. The more randomized encryption that is produced, the more randomized output from the hash function in question is produced and then a more even load balance is acquired for the resources. A wide variety of encryption algorithms exists, having different kinds of cipher keys, and will not be discussed in more detail here. The main feature of the present invention is to use a function that have randomizing properties, and a suitable encryption function should not be difficult to find for the skilled person. Any other randomizing means is also conceivable within the scope of the present invention.

The invention is not limited to the above described embodiments, but may vary freely within the scope of the appended claims. The users may for example be computers, where the system is a computer network comprising computer system resources, such as servers and printers, to which the users are directed.

Encryption algorithms that may form basis for the encryption algorithm according to the invention may for example be AES (Advanced Encryption Standard).

Encryption algorithms may not only use a cipher key Kc for generating a cipher, but other kinds of initializing data are also conceivable.

## Claims

1. A system comprising at least two resources (3) and a hash function (4), where the hash function (4) is arranged for distributing external users (1) to the resources (3), which external users (1) are in the form of
devices handled by humans, where the number of users (1) is larger than the number of resources (3),
**characterized in**
**that** the system further comprises randomizing means (5) that together with the hash function (4) is arranged for, at least to a part, creating a uniform distribution of the external users (1) among the resources (3), where the randomizing means (5) is in the form of an encryption algorithm wherein an input results in any output within an encryption output range, having the same probability for acquiring any value within the encryption output range every time the input is encrypted.

2. A system according to claim 1, **characterized in that** the encryption algorithm (5) encrypts a unique user identification code or number (IdX) and sends the cipher output (6) to the hash function (4).

3. A system according to claim 2, **characterized in that** the hash function output (8) is arranged to be linked to a certain resource (3').

4. A system according to claim 1, **characterized in that** the hash function (4) is arranged to be fed at its input with a unique user identification code or number (IdX), and sends the hash function (4) output (8) to the encryption algorithm (5).

5. A system according to claim 4, **characterized in that** the cipher output (6) is arranged to be linked to a certain resource (3').

6. A system according to claim 1, **characterized in that** the encryption algorithm is a part of the hash function, which hash function thus constitutes a so-called keyed hash function (10).

7. A system according to any one of the previous claims, **characterized in that** the users (1) are pieces of mobile equipment handled by mobile equipment owners, and that the system (2) is a mobile equipment system node, and where the resources (3) are services provided at the mobile equipment system node.

8. A system according to any one of the claims 1-6, **characterized in that** the users (1) are computers, where the system (2) is a computer network, and where the resources (3) are computer system resources to which the computers are directed.

9. A method for distributing external users (1) to at least two resources (3) in a system, which external users (1) are in the form of devices handled by humans, where the number of users (1) is larger than the number of resources (3), which method comprises the step of inputting a unique user identification code or number (IdX) into the system,
the method being **characterized by** the step of:
creating a uniform distribution of the users (1) among the resources (3), where the distribution is accomplished by using a hash function (4), where the uniformity of the distribution is created by using randomizing means, where the randomizing means (5) is in the form of an encryption algorithm wherein an input results in any output within an encryption output range, having the same probability for acquiring any value within the encryption output range every time the input is encrypted.

10. A method according to claim 9, **characterized in that** the encryption algorithm (5) encrypts a unique user identification code or number (IdX) and sends the cipher output (6) to the hash function (4).

11. A method according to claim 10, **characterized in that** the hash function output (8) is linked to a certain resource (3').

12. A method according to claim 9, **characterized in that** the hash function (4) is fed at its input with the unique user identification code or number (IdX), and sends the hash function output (8) to the encryption algorithm (5).

13. A method according to claim 12, **characterized in that** the cipher output (6) is linked to a certain resource (3').

14. A method according to claim 9, **characterized in that** the encryption algorithm is a part of the hash function, which hash function thus constitutes a so-called keyed hash function (10).

15. A method according to any one of the claims 9-14, **characterized in that** the users (1) are pieces of mobile equipment handled by mobile equipment owners, and that the system (2) is a mobile equipment system node, and where the resources (3) are services provided at the mobile equipment system node.

16. A method according to any one of the claims 9-14, **characterized in that** the users (1) are computers, where the system (2) is a computer network, and where the resources (3) are computer system resources to which the computers are directed.

## Patentansprüche

1. System, umfassend mindestens zwei Betriebsmittel (3) und eine Hash-Funktion (4), wobei die Hash-Funktion (4) eingerichtet ist, um externe Benutzer (1) auf die Betriebsmittel (3) zu verteilen, wobei diese externen Benutzer (1) als Vorrichtungen vorliegen, die von Menschen gehandhabt werden, wobei die Anzahl der Benutzer (1) größer ist als die Anzahl der Betriebsmittel (3),
**dadurch gekennzeichnet, dass**
das System ferner ein Randomisierungsmittel (5) das zusammen mit der Hash-Funktion (4) eingerichtet ist, um mindestens teilweise eine einheitliche Verteilung der externen Benutzer (1) auf die Betriebsmittel (3) zu erstellen, wobei das Randomisierungsmittel (5) als Verschlüsselungsalgorithmus vorliegt, wobei eine Eingabe zu einer beliebigen Ausgabe innerhalb eines Verschlüsselungsausgabenbereichs führt und dabei die gleiche Wahrscheinlichkeit aufweist, jedes Mal wenn die Eingabe verschlüsselt wird, einen beliebigen Wert innerhalb des Verschlüsselungsausgabenbereichs anzunehmen.

2. System nach Anspruch 1, **dadurch gekennzeichnet, dass** der Verschlüsselungsalgorithmus (5) einen einzigartigen Code bzw. eine Nummer (IdX) zur Identifizierung des Benutzers verschlüsselt und die Verschlüsselungsausgabe (6) an die Hash-Funktion (4) sendet.

3. System nach Anspruch 2, **dadurch gekennzeichnet, dass** die Ausgabe der Hash-Funktion (8) eingerichtet ist, um mit einem bestimmten Betriebsmittel (3') verbunden zu werden.

4. System nach Anspruch 1, **dadurch gekennzeichnet, dass** die Hash-Funktion (4) eingerichtet ist, um as ihrem Eingang mit einem einzigartigen Code bzw. einer Nummer (IdX) zur Identifizierung des Benutzers gespeist zu werden und die Ausgabe (8) der Hash-Funktion (4) an den Verschlüsselungsalgorithmus (5) sendet.

5. System nach Anspruch 4, **dadurch gekennzeichnet, dass** die Verschlüsselungsausgabe (6) eingerichtet ist, um mit einem bestimmten Betriebsmittel (3') verbunden zu sein.

6. System nach Anspruch 1, **dadurch gekennzeichnet, dass** der Verschlüsselungsalgorithmus Teil der Hash-Funktion ist, wobei diese Hash-Funktion somit eine so genannte getastete Hash-Funktion (10) bildet.

7. System nach einem der vorhergehenden Ansprüche, **dadurch gekennzeichnet, dass** die Benutzer (1) mobile Einrichtungen sind, die von Besitzern mobiler Einrichtungen gehandhabt werden, und dass das System (2) ein Mobileinrichtungs-Systemknoten ist, und wobei die Betriebsmittel (3) Dienste sind, die an dem Mobileinrichtungs-Systemknoten bereitgestellt werden.

8. System nach einem der Anspruche 1 bis 6, **dadurch gekennzeichnet, dass** die Benutzer (1) Computer sind, wobei das System (2) ein Computemetzwerk ist, und wobei die Betriebsmittel (3) Betriebsmittel von Computersystemen sind, denen die Computer zugeführt werden.

9. Verfahren zum Verteilen externer Benutzer (1) auf mindestens zwei Betriebsmittel (3) in einem System, wobei diese externen Benutzer (1) als Vorrichtungen vorliegen, die von Menschen gehandhabt werden, wobei die Anzahl der Benutzer (1) größer als die Anzahl der Betriebsmittel (3) ist, wobei das Verfahren den Schritt des Eingebens eines einzigartigen Codes bzw. einer Nummer (IdX) zur Identifizierung des Benutzers in das System umfasst,
wobei das Verfahren **gekennzeichnet ist durch** folgenden Schritt:
Erstellen einer einheitlichen Verteilung der Benutzer (1) auf die Betriebsmittel (3), wobei die Verteilung unter Verwendung einer Hash-Funktion (4) vorgenommen wird, wobei die Einheitlichkeit der Verteilung erstellt wird, indem Randomisierungsmittel verwendet werden, wobei das Randomisierungsmittel (5) als Verschlüsselungsalgorithmus vorliegt, wobei eine Eingabe zu einer beliebigen Ausgabe innerhalb eines Verschlüsselungsausgabenbereichs führt und dabei die gleiche Wahrscheinlichkeit aufweist, jedes Mal wenn die Eingabe verschlüsselt wird, einen beliebigen Wert innerhalb des Verschlüsselungsausgabenbereichs anzunehmen.

10. Verfahren nach Anspruch 9, **dadurch gekennzeichnet, dass** der Verschlüsselungsalgorithmus (5) einen einzigartigen Code bzw. eine Nummer (IdX) zur Identifizierung des Benutzers verschlüsselt und die Verschlüsselungsausgabe (6) an die Hash-Funktion (4) sendet.

11. Verfahren nach Anspruch 10, **dadurch gekennzechnet, dass** die Ausgabe (8) der Hash-Funktion mit einem bestimmten Betriebsmittel (3') verbunden ist.

12. Verfahren nach Anspruch 9, **dadurch gekennzeichnet, dass** die Hash-Funktion (4) an ihrem Eingang mit dem einzigartigen Code bzw. einer Nummer (IdX) zur Identifizierung des Benutzers gespeist wird und die Ausgabe (8) der Hash-Funktion (4) an den Verschlüsselungsalgorithmus (5) sendet.

13. verfahren nach Anspruch 12, **dadurch gekennzeichnet, dass** die Verschlüsselungsausgabe (6) mit einem bestimmten Betriebsmittel (3') verbunden ist.

14. Verfahren nach Anspruch 9, **dadurch gekennzeichnet, dass** der Verschlüsselungsalgorithmus Teil der Hash-Funktion ist, wobei diese Hash-Funktion somit eine so genannte getastete Hash-Funktion (10) bildet.

15. Verfahren nach einem der Ansprüche 9 bis 14, **dadurch gekennzeichnet, dass** die Benutzer (1) mobile Einrichtungen sind, die von Besitzern von mobilen Einrichtungen gehandhabt werden, und dass das System (2) ein Mobileinrichtungs-Systemknoten ist, und wobei die Betriebsmittel (3) Dienste sind, die an dem Mobileinrichtungs-Systemknoten bereitgestellt werden.

16. Verfahren nach einem der Ansprüche 9 bis 14, **dadurch gekennzeichnet, dass** die Benutzer (1) Computer sind, wobei das System (2) ein Computernetzwerk ist, und wobei die Betriebsmittel (3) Betriebsmittel eines Computersystems sind, denen die Computer zugeführt werden.

## Revendications

1. Système, comprenant au moins deux ressources (3) et une fonction de hachage (4), dans lequel la fonction de hachage (4) est agencée pour répartir des utilisateurs externes (1) sur les ressources (3), ces utilisateurs externes (1) se présentant sous forme de dispositifs manipulés par des personnes, le nombre d'utilisateurs (1) étant supérieur au nombre de ressources (3),
**caractérisé en ce que**
le système comprend en outre un moyen de randomisation (5) qui, avec la fonction de hachage (4), est agencé pour créer au moins en partie une répartition uniforme des utilisateurs externes (1) sur les ressources (3), dans lequel le moyen de randomisation (5) se présente sous la forme d'un algorithme de chiffrage dans lequel une entrée aboutit à une sortie quelconque comprise dans une plage de sortie de chiffrage, en ayant la même probabilité d'acquérir une valeur quelconque comprise dans la plage de sortie de chiffrage, chaque fois que l'entrée est chiffrée.

2. Système selon la revendication 1, **caractérisé en ce que** l'algorithme de chiffrage (5) chiffre un code ou numéro d'identification d'utilisateur unique (IdX) et envoie la sortie chiffrée (6) à la fonction de hachage (4).

3. Système selon la revendication 2, **caractérisé en ce que** la sortie de fonction de hachage (8) est agencée pour être liée à une certaine ressource (3').

4. Système selon la revendication 1, **caractérisé en ce que** la fonction de hachage (4) est agencée pour être alimentée au niveau de son entrée par un code ou numéro d'identification d'utilisateur unique (IdX), et envoie la sortie (8) de la fonction de hachage (4) à l'algorithme de chiffrage (5).

5. Système selon la revendication 4, **caractérisé en ce que** la sortie de chiffrage (6) est agencée pour être liée à une certaine ressource (3').

6. Système selon la revendication 1, **caractérisé en ce que** l'algorithme de chiffrage fait partie de la fonction de hachage, cette fonction de hachage constituant ainsi une fonction de hachage dite à clé (10).

7. Système selon l'une quelconque des revendications précédentes, **caractérisé en ce que** les utilisateurs (1) sont des équipements mobiles manipulés par des propriétaires d'équipements mobiles, et **en ce que** le système (2) est un noeud de système d'équipements mobiles, et dans lequel les ressources (3) sont des services fournis au niveau du noeud de système d'équipements mobiles.

8. Système selon l'une quelconque des revendications 1 à 6, **caractérisé en ce que** les utilisateurs (1) sont des ordinateurs, dans lequel le système (2) est un réseau informatique, et dans lequel les ressources (3) sont des ressources de système informatique vers lesquelles les ordinateurs sont dirigés.

9. Procédé pour répartir des utilisateurs externes (1) sur au moins deux ressources (3) dans un système, ces utilisateurs externes (1) se présentant sous la forme de dispositifs manipulés par des personnes, dans lequel le nombre d'utilisateurs (1) est supérieur au nombre de ressources (3), le procédé comprenant l'étape consistant à entrer un code ou numéro d'identification d'utilisateur unique (IdX) dans le système,
le procédé étant **caractérisé par** l'étape consistant à :
créer une répartition uniforme des utilisateurs (1) parmi les ressources (3), dans lequel la répartition est réalisée en utilisant une fonction de hachage (4), dans lequel l'uniformité de la répartition est créée en utilisant un moyen de randomisation, dans lequel le moyen de randomisation (5) se présente sous la forme d'un algorithme de chiffrage, dans lequel une entrée aboutit à une sortie quelconque comprise dans une plage de sortie de chiffrage, en ayant la même probabilité d'acquérir une valeur quelconque comprise dans la plage de sortie de chiffrage chaque fois que l'entrée est chiffrée.

10. Procédé selon la revendication 9, **caractérisé en ce que** l'algorithme de chiffrage (5) chiffre un code ou numéro d'identification d'utilisateur unique (IdX) et envoie la sortie de chiffrage (6) à la fonction de hachage (4).

11. Procédé selon la revendication 10, **caractérisé en ce que** la sortie (8) de la fonction de hachage est liée à une certaine ressource (3').

12. Procédé selon la revendication 9, **caractérisé en ce que** la fonction de hachage (4) est alimentée au niveau de son entrée par un code ou numéro d'identification d'utilisateur unique (IdX) et envoie la sortie (8) de la fonction de hachage à l'algorithme de chiffrage (5).

13. Procédé selon la revendication 12, **caractérisé en ce que** la sortie de chiffrage (6) est liée à une certaine ressource (3').

14. Procédé selon la revendication 9, **caractérisé en ce que** l'algorithme de chiffrage fait partie de la fonction de hachage, cette fonction de hachage constituant ainsi une fonction de hachage dite à clé (10).

15. Procédé selon l'une quelconque des revendications 9 à 14, **caractérisé en ce que** les utilisateurs (1) sont des équipements mobiles manipulés par des propriétaires d'équipements mobiles, et **en ce que** le système (2) est un noeud de système d'équipements mobiles, et dans lequel les ressources (3) sont des services fournis au niveau du noeud de système d'équipements mobiles.

16. Procédé selon l'une quelconque des revendications 9 à 14, **caractérisé en ce que** les utilisateurs (1) sont des ordinateurs, dans lequel le système (2) est un réseau informatique, et dans lequel les ressources (3) sont des ressources de système informatique vers lesquelles les ordinateurs sont dirigés.
